# EUROPÄISCHE PATENTSCHRIFT

(11) **EP 3 449 140 B1**
(45) Veröffentlichungstag und Bekanntmachung des Hinweises auf die Patenterteilung: **12.08.2020**
(21) Anmeldenummer: 17732856.4
(22) Anmeldetag: 19.06.2017
(51) Int. Cl.: F16B 39/24

(54) **SCHRAUBBEFESTIGERZUSAMMENSTELLUNG SOWIE SCHEIBENANORDNUNG DAFÜR**
SCREW FASTENER ARRANGEMENT AND WASHER ASSEMBLY THEREFOR
AGENCEMENT D'ÉLÉMENT DE BLOCAGE DE VIS ET ENSEMBLE FORMANT RONDELLE APPROPRIÉ

(30) Priorität: 24.06.2016 DE 202016103361 U
(43) Veröffentlichungstag der Anmeldung: 06.03.2019
(73) Patentinhaber: Heico Befestigungstechnik Gmbh, 59469 Ense-Niederense (DE)
(72) Erfinder: LUTTER, Frank, 59514 Welver-Stocklarn (DE)
(74) Vertreter: Haverkamp, Jens
(86) Internationale Anmeldenummer: PCT/EP2017/064942
(87) Internationale Veröffentlichungsnummer: WO 2017/220495

(56) Entgegenhaltungen:
- WO-A1-2005/024253
- JP-U- H0 398 313

## Beschreibung

Die Erfindung betrifft eine Scheibenanordnung für einen Schraubbefestiger mit zumindest einer eine Öffnung für den Durchgriff des männlichen Teils eines Schraubbefestigers aufweisenden Scheibe, wobei in der Öffnung der wenigstens einen Scheibe eine Kupplungshülse mit einer in radialer Richtung nach außen offenen U-förmigen Profilierung, gebildet durch zwei mit Abstand zueinander angeordnete und in radialer Richtung nach außen abragende Flansche, angeordnet ist, durch welche Flansche die Kupplungshülse formschlüssig in Richtung der Längsachse der Öffnung an der zumindest einen Scheibe gehalten ist.

Zum Verspannen von zwei oder mehr Gegenständen miteinander werden Befestiger verwendet, wobei typischerweise zwei Befestiger komplementär zueinander ausgelegt sind, wie dieses beispielsweise bei Schraubbefestigern und somit bei einer Schraube und einer Mutter der Fall ist. Um eine Krafteinleitung von der Unterseite des Schraubenkopfes - Gleiches gilt für die zu dem zu verspannenden Gegenstand weisende Seite der Mutter - in den oder die zu verspannenden Teile zu verbessern, werden in vielen Fällen Scheiben zwischen den Schraubenkopf und die Oberfläche des Gegenstandes, gegenüber dem der Schraubenkopf verspannt wird, eingesetzt. Bei diesen Scheiben kann es sich um Beilagscheiben oder auch um Sicherungsscheiben handeln. Sicherungsscheiben werden eingesetzt, wenn ein unerwünschtes Lösen eines solchen Schraubbefestigers verhindert werden soll.

WO 2005/024253 A1 offenbart ein Keilsicherungsscheibenpaar, welches innenseitig durch eine Hülse zusammengehalten ist. Die innere Mantelfläche der Hülse ist zylindrisch. Somit kann das aus diesem Stand der Technik vorbekannte, durch die Hülse zusammengehaltene Keilsicherungsscheibenpaar als Einheit auf den Schaft eines Schraubbefestigers aufgesetzt werden. Insofern handelt es sich bei diesem Stand der Technik um einen solchen, durch den lediglich zwei Scheiben durch eine Hülse zusammengehalten sind.

Um eine Montage eines Schraubbefestigers vor Ort zu erleichtern und um zu verhindern, dass beim Spannen einer Vielzahl von Befestigern vergessen wird, unterhalb des Schraubenkopfes eine Scheibe - sei es als Beilagscheibe oder als Sicherungsscheibe - anzuordnen, sind Schrauben entwickelt worden, auf deren Schraubenschaft unverlierbar eine Scheibe gehalten ist. Erreicht wird dieses dadurch, dass die unter den Schraubenkopf anzuordnende Scheibe auf den bezüglich der Gewindeausprägung ungewalzten Schraubenschaft aufgesteckt wird und erst anschließend das Gewinde gewalzt wird. Der Außendurchmesser des gewalzten Gewindes ist größer als der Durchmesser der Öffnung der Scheibe, die sich sodann durch das Gewinde auf dem Schaft unterhalb des Schraubenkopfes befindet und damit unverlierbar an den Befestiger angeschlossen ist.

Nachteilig ist bei diesem Konzept, dass die Scheiben sich auf dem Schraubenschaft während des Vorgangs des Gewindewalzens befinden. Handelt es sich bei diesen Scheiben um Sicherungsscheiben, besteht die Gefahr, dass bei dem Walzen des Gewindes zwischen den Walzplatten Sicherungselemente der Scheibe beschädigt werden. Bei Beilagscheiben können Riefen oder anderweitige Beschädigungen entstehen, so dass hierdurch die vorgesehene Anlagefläche reduziert wird. Zudem lässt sich die Bereitstellung einer solchen Schraube mit daran angeschlossener Scheibe unter wirtschaftlichen Gesichtspunkten nur herstellen, wenn eine hinreichend große Schraubenanzahl hergestellt wird. Zu berücksichtigen ist auch, dass Schrauben mit ein und demselben Nenndurchmesser in unterschiedlichsten Längen hergestellt werden. Dies bedeutet für einen Hersteller, dass er in entsprechender Stückzahl Schrauben mit daran angeschlossenen Scheiben in entsprechenden Mengen in den unterschiedlichen Längen herstellen und bevorraten muss. Aus Kostengründen ist dieses vorbekannte Konzept bei Kleinserien nicht einsetzbar.

Ausgehend von diesem diskutierten Stand der Technik liegt der Erfindung die Aufgabe zugrunde, eine Schraubbefestigerzusammenstellung mit zumindest einer an den Befestiger angeschlossenen, eine Öffnung aufweisenden Scheibe vorzuschlagen, mit dem die zu dem vorstehend diskutierten Stand der Technik aufgezeigten Nachteile zumindest weitgehend vermieden sind.

Gelöst wird diese Aufgabe erfindungsgemäß durch eine Scheibenanordnung mit den Merkmalen des Anspruchs 1.

Die zumindest eine Scheibe dieser Scheibenanordnung ist mit einer Kupplungshülse ausgerüstet, die formschlüssig in Längserstreckung der zumindest einen Scheibe an dieser gehalten ist. Die Kupplungshülse trägt mehrere in radialer Richtung nach innen vorspringende Verklammerungsklinken. Diese sind in Richtung der Längserstreckung der Kupplungshülse elastisch gegenüber der Innenwand der Kupplungshülse verstellbar. Typischerweise resultiert die Verstellbarkeit der Verklammerungsklinken aus dem für die Herstellung der Kupplungshülse eingesetzten Material. Diese greifen zum Anschließen der Scheibe an den Befestiger in eine in längsaxialer Richtung desselben wirkenden Hinterschnitt ein. Hierbei kann es sich beispielsweise um zwei benachbarte Gewindegänge des Schaftes des Schraubbefestigers handeln. Beim Eingriff in den Hinterschnitt des Schraubbefestigers wirken die Verklammerungsklinken als Riegel. Infolge der elastischen Verstellbarkeit der Verklammerungsklinken kann eine solche Scheibe auf den Schraubenschaft einer Schraube aufgeschoben werden, nachdem das Gewinde gewalzt worden ist. Die Verklammerungskraft, mit der die Verklammerungsklinken in einer solchen Nut, etwa in einem Gewinde festgesetzt sind, ist hinreichend hoch, damit die Scheibe bei einer üblichen Handhabung des Schraubbefestigers bzw. der Schraubbefestigerzusammenstellung nicht entfernt werden kann. Durchaus möglich ist eine Auslegung der Kupplungshülse, dass die Scheibe mit Einsatz von etwas Kraft von dem Befestiger, beispielsweise dem Schraubenschaft wieder abgezogen werden kann. Gemäß einer bevorzugten Ausgestaltung ist vorgesehen, dass die Verklammerungsklinken entgegen ihrer Montagerichtungauf den Schraubenschaft einer Schraube als Schraubbefestiger, geneigt sind und sodann widerhakenartig in den in längsaxialer Richtung wirkenden Hinterschnitt eingreifen. Dann ist die zum Aufschieben der Scheibe auf den Gewindeschaft benötige Kraft kleiner, typischerweise signifikant kleiner als die Kraft, die aufgewendet werden müsste, um die Scheibe von dem Schraubenschaft wieder abzuziehen. Dieses ist in aller Regel ohnehin nicht erforderlich. Die radiale Länge der Verklammerungsklinken kann bei einer geneigten Auslegung derselben so groß sein, dass ein Abziehen der aus Scheibe und Kupplungshülse zusammengesetzten Scheibenanordnung nur mit einer plastischen Verformung der Verklammerungsklinken oder einer Zerstörung derselben möglich ist.

Eine solche Scheibe lässt sich beispielsweise auch an einer als Mutter ausgelegten Schraubbefestiger montieren, wenn diese im Anschluss an ihre Scheibenanlagefläche eine umlaufende Nut aufweist. Dann greifen die Verklammerungsklinken in diese Nut ein.

Von besonderem Vorteil bei diesem Konzept ist, dass eine Schraube mit ihrem Gewinde völlig unabhängig und ohne Berücksichtigung einer auf dem Schraubenschaft befindlichen Scheibe hergestellt werden kann. Zudem werden bei diesem Konzept nur diejenigen Schrauben mit einer Scheibe ausgerüstet, die mit einer solchen unverlierbaren Scheibe ausgerüstet werden sollen. Daher eignet sich eine solche Sicherungsscheibe mit ihrer Kupplungshülse in besonderem Maße auch zum Erstellen von Befestigern mit daran gehaltenen Scheiben in Kleinserien.

Die Kupplungshülse fasst die zumindest eine Scheibe mit ihren Flanschen in Längserstreckung der Öffnung der Scheibe ein. Hierdurch ist die Kupplungshülse formschlüssig in besagter Richtung an die Scheibe angeschlossen.

Angeschlossen werden kann mit einer solchen Kupplungshülse letztendlich jede beliebige Scheibe an einen Befestiger. Dieses schließt auch Sicherungsscheiben der unterschiedlichsten Art ein. Die Einfassung der zumindest einen Scheibe durch die in radialer Richtung nach außen abragenden Flansche der Kupplungshülse macht man sich in einem bevorzugten Ausführungsbeispiel zunutze, um die beiden Scheiben eines Keilsicherungspaares zusammenzuhalten. In vielen Fällen sind derartige Keilsicherungsscheiben zur Ausbildung eines Keilsicherungsscheibenpaares miteinander verklebt, um sicherzustellen, dass diese mit ihren bestimmungsgemäß zueinander weisenden Seiten montiert werden. Dieses ist bei Verwendung einer solchen Kupplungshülse nicht erforderlich, da zwei Keilsicherungsscheiben durch die ihre jeweils die voneinander weg weisenden Oberflächen überkragenden Flansche der Kupplungshülse zusammengehalten sind.

Die Verklammerungsklinken können grundsätzlich in Bezug auf die Höhe bzw. Längserstreckung der Kupplungshülse in verschiedenen Positionen angeordnet sein. Gemäß einem Ausführungsbeispiel befinden sich diese am oberen Abschluss der Kupplungshülse, und zwar an demjenigen Abschluss, der zu der Scheibenanlagefläche des Befestigers weist. Handelt es sich bei dem Befestiger um eine Schraube, dann greifen die Verklammerungsklinken bei einer solchen Ausgestaltung in den Gewindeauslauf und damit in die Kehle zwischen der Unterseite des Schraubenkopfes und dem Beginn des Gewindes ein. Eine solche Anordnung ist zweckmäßig, wenn die Verklammerungsklinken entgegen der Montagebewegungsrichtung zum Anschließen derselben an einen Befestiger geneigt sind. Dann stellt die Anordnung der Verklammerungsklinken an dem einen Abschluss der Kupplungshülse zugleich eine Kodierung dar und zeigt an, mit welcher Seite die Anordnung aus Scheibe/Scheiben und Kupplungshülse an einem Befestiger zu montieren ist. Eine Montagekodierung kann auch auf andere Weise vorgesehen sein.

Die Verklammerungswirkung der Verklammerungsklinken ist über die Anzahl der Verklammerungsklinken, die typischerweise umfänglich mit jeweils gleichem Winkelabstand zueinander angeordnet sind, das Material der Kupplungshülse und damit typischerweise auch dasjenige der Verklammerungsklinken, die Anschlussgeometrie der Verklammerungsklinken an die übrigen Bestandteile der Kupplungshülse und/oder über den Winkelbetrag einstellbar, über den sich jede Verklammerungsklinke erstreckt. Je größer dieser Winkelbetrag ist, desto steifer reagiert eine Verklammerungsklinke in Bezug auf ihre Verstellbarkeit in Längsrichtung der Öffnung der Kupplungshülse und desto mehr Kraft muss aufgewendet werden, um diese so weit zu verstellen, dass die Scheibe von dem Befestiger abgezogen werden kann. Die Anschlussgeometrie der Verklammerungsklinken an die übrigen Bestandteile der Kupplungshülse kann beispielsweise durch eine Nut zum Erzielen der gewünschten Verstellbarkeit bereit gestellt sein.

Auch wenn man typischerweise die Verklammerungsklinken in ein und derselben Höhe im Bezug auf die Höhe der Kupplungshülse anordnen wird, ist es möglich, diese in unterschiedlichen Höhen und somit in unterschiedlichen Positionen in Bezug auf die Längserstreckung der Kupplungshülse anzuordnen. Dieses setzt voraus, dass die Kupplungshülsen dann an einen Schraubbefestiger angeschlossen werden, der in unterschiedlichen Höhen in Bezug auf die Längserstreckung der Kupplungshülse entsprechende Hinterschnitte aufweist. Bei einer Schraube als Schraubbefestiger ist dieses aufgrund des sich über eine gewisse Längserstreckung erstreckenden Gewindes der Fall.

In radialer Richtung erstrecken sich die Verklammerungsklinken vorzugsweise bis zur Sohle der einen solchen Hinterschnitt bildenden Nut des Befestigers, was im Falle einer Schraube der Schraubenkern ist. Besonders effektiv ist eine Verklammerung mit derartigen Verklammerungsklinken, wenn diese zusätzlich entgegen der Montagerichtung widerhakenähnlich geneigt sind. Eine Verstellung der Verklammerungsklinken zum Abziehen der Scheibe ist dann durch die Sohle der Nut blockiert, so dass die Scheibe mit ihrer Kupplungshülse nicht mehr beschädigungs- oder zerstörungsfrei von dem Befestiger abgezogen werden kann. Eine solche Ausgestaltung der Kupplungshülse erlaubt auch das Einbringen einer Nut im Wurzelbereich der Verklammerungsklinken, um eine Verstellbarkeit entgegen der Montagerichtung zu erzielen.

Die Kupplungshülse wird vorzugsweise aus Metall oder Kunststoff hergestellt. Zur Ausbildung der Scheibe mit ihrer Kupplungshülse wird man die Kupplungshülse aus einem im Bezug auf das Material des bzw. der Befestiger und in Bezug auf die verspannenden Gegenstände geeigneten Material herstellen.

Ein besonderer Vorteil bei einer solchen mit einer Kupplungshülse ausgerüsteten Schraubbefestigerzusammenstellung ist, dass die Kupplungshülse zugleich als Dichtung eingesetzt ist. Dabei ist die Höhe in der Kupplungshülse im unverspannten Zustand des Befestigers größer als die Dicke der zumindest einen Scheibe, so dass die in Längsrichtung voneinander weg weisenden Außenseiten der Flansche an die Scheibenanlagenflächen des Befestigers - einerseits - und die Oberfläche des zu verspannenden Gegenstandes - andererseits - gepresst werden. Bei verspanntem Befestiger wirkt seine Scheibenanlagefläche unmittelbar auf das Widerlager und wird gegen dieses verspannt. Insofern resultiert die Anpresskraft der Dichtfläche aus der elastischen Rückstellkraft der Dichtung und/oder der Kupplungshülse. Eine solche Ausgestaltung der Kupplungshülse mit Dichtfunktionalität erlaubt eine Kapselung des Gewindes und der Gewindeöffnung eines Befestigers mit der Folge, dass darin eingebrachtes Schmiermittel dauerhaft darin verbleibt und nicht ausgewaschen wird. Aus diesem Grunde lässt sich eine solche Scheibenanordnung, bei der die Kupplungshülse zugleich eine Dichtung ausbildet, auch für solche Anwendungen einsetzen, in denen das Gewinde gekapselt sein muss, damit darin enthaltene Schmierstoffe nicht austreten oder etwa durch Reinigungsflüssigkeit ausgewaschen werden. Somit können diese auch in Lebensmittel verarbeitenden Anlagen eingesetzt werden. Derartige Befestiger lassen sich auch nach vielen Jahren problemlos wieder lösen.

Aufgrund der beschriebenen Dichtfunktionalität der Kupplungshülse lassen sich erstmals auch Scheibenanordnungen, beispielsweise zwei Keilsicherungsscheiben, als Keilsicherungsscheibenpaar angeordnet, abgedichtet verspannen, ohne die zum Lösen eines solchen Keilsicherungsscheibenpaares notwendige Bewegbarkeit der Keilsicherungsscheiben gegeneinander, insbesondere auch in axialer Richtung, zu beeinträchtigen.

Die Dichtwirkung einer solchen Kupplungshülse kann aus dem Material der Kupplungshülse selbst resultieren. Möglich ist auch die Ausbildung einer metallischen Dichtung, wenn es sich bei der Kupplungshülse um eine solche aus Metall handelt. Typischerweise ist das Material der Kupplungshülse in einem solchen Fall weicher als dasjenige der benachbarten Scheibenanlagefläche des Befestigers und des zu verspannenden Gegenstandes. Durchaus möglich ist es auch, auf die diesbezüglichen Stirnflächen der Flansche der Kupplungshülse einen Dichtungsring, aus einem anderen Material beispielsweise aus Silikon (Silikonraupe) aufzutragen oder sogar einen separaten, vorzugsweise von der Kupplungshülse gehaltenen Dichtungsring vorzusehen.

Die in radialer Richtung nach außen abragenden Flansche sind umlaufend ausgeführt.

Nachfolgend ist die Erfindung anhand eines Ausführungsbeispiels unter Bezugnahme auf die beigefügten Figuren beschrieben. Es zeigen:
- **Fig. 1:**: eine perspektivische Ansicht eines durch eine Kupplungshülse innenseitig zusammengehaltenen Keilsicherungsscheibenpaares als eine nicht erfindungsgemäße Scheibenanordnung,
- **Fig. 2:**: einen Schnitt durch die in Figur 1 gezeigte Anordnung,
- **Fig. 3:**: das durch die Kupplungshülse zusammengehaltene Keilsicherungsscheibenpaar montiert an einer Schraube,
- **Fig. 4:**: ein Keilsicherungsscheibenpaar, zusammengehalten durch eine Kupplungshülse gemäß der Erfindung und
- **Fig. 5:**: ein Keilsicherungsscheibenpaar, zusammengehalten durch eine Kupplungshülse gemäß einer weiteren Ausgestaltung der Erfindung entsprechend dem Ausführungsbeispiel der Figur 4.

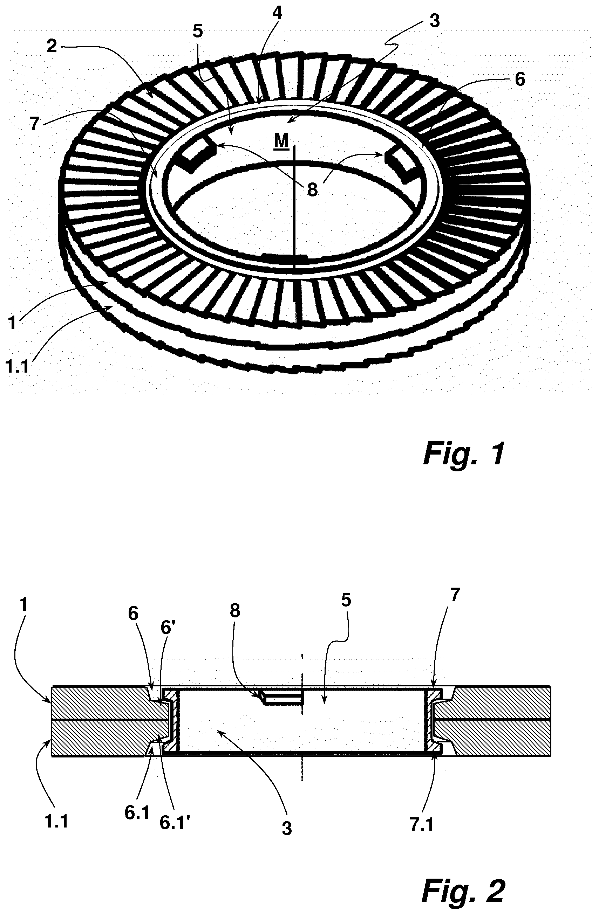

Zwei Keilsicherungsscheiben 1, 1.1 stellen ein Keilsicherungsscheibenpaar dar. Die beiden Keilsicherungsscheiben 1, 1.1 weisen an ihren zueinander weisenden Seiten in einem bestimmten Winkel geneigte Keilrippen auf. An den voneinander weg weisenden Seiten sind zur Verklammerung mit dem jeweiligen Widerlager zusammenwirkende, typischerweise sägezahnartig ausgeführte Radialrippen vorgesehen. Bei dem dargestellten Ausführungsbeispiel ist vorgesehen, dass die in Figur 1 sichtbare Oberseite 2 mit ihren Radialrippen sich an der Scheibenanlagefläche eines Schraubbefestigers abstützt. Der Keilflächenwinkel der Keilflächen der Keilrippen der Keilsicherungsscheiben 1, 1.1 ist größer als der Steigungswinkel des zum Bewirken einer Vorspannung eingesetzten Schraubgewindes des Schraubbbefestigers.

Die beiden Keilsicherungsscheiben 1, 1.1 sind durch eine Kupplungshülse 3 zusammengehalten. Bei dem dargestellten Ausführungsbeispiel handelt es sich bei der Kupplungshülse 3 um ein Kunststoffteil, welches durch einen Spritzgussprozess hergestellt ist. Die Kupplungshülse 3 durchgreift die zentralen Öffnungen 4 der Keilsicherungsscheiben 1, 1.1. Die Kupplungshülse 3 fasst mit ihrer zylindrischen inneren Mantelfläche eine Durchstecköffnung 5 ein. Die Durchstecköffnung 5 dient zum Durchführen eines Schaftes, insbesondere eines Gewindeschaftes eines als Schraube ausgelegten Schraubbefestigers. Die Keilsicherungsscheiben 1, 1.1 weisen an ihren jeweils voneinander weg weisenden Oberseiten, wie in Figur 1 bezüglich der Oberseite 2 erkennbar, eine Stufe 6 an ihrem zu ihrer Öffnung 4 weisenden Endabschnitt auf. Durch diese Stufe 6 wird die effektive Dicke der jeweiligen Keilsicherungsscheibe 1, 1.1 im Lochrandbereich reduziert. Über diese Stufe 6 greift ein erster umlaufender Flansch 7 der Kupplungshülse 3. Die Kupplungshülse 3 trägt an ihrer Unterseite, wie aus Figur 2 erkennbar, ebenfalls einen umlaufenden, nach außen abragenden Flansch 7.1. Durch die beiden voneinander beabstandeten Flansche 7, 7.1 ist eine in radialer Richtung nach außen offene U-förmige Profilierung zum Bereitstellen einer Aufnahme gebildet, in die die durch die Stufen 6, 6.1 gebildeten, in radialer Richtung nach innen gerichteten Vorsprünge 6', 6.1' der Keilsicherungsscheiben 1, 1.1 eingreifen.

Auf diese Weise sind die beiden Keilsicherungsscheiben 1, 1.1 durch die Kupplungshülse 3 zusammengehalten. Die Keilsicherungsscheiben 1, 1.1 sind in ihrer in den Figuren gezeigten Stellung auf ihren die Keilflächen tragenden Seiten nicht miteinander verklebt.

Zum Anschließen des Keilsicherungsscheibenpaares an einen Schraubbefestiger, der bei dem dargestellten Ausführungsbeispiel als Schraube ausgeführt ist, sind an die innere Mantelfläche M der Kupplungshülse 3 mehrere, bei dem dargestellten Ausführungsbeispiel mit gleichem Winkelabstand zueinander angeordnete Verklammerungsklinken 8 angeformt. Diese sind, wie in der in Figur 1 erkennbaren linken Verklammerungsklinke 8 und bezüglich der in Figur 2 gezeigten rechten Verklammerungsklinke 8 an den oberen Abschluss der Kupplungshülse 3 nach innen abragend angeformt.

Zudem sind die Verklammerungsklinken 8 in Richtung zu dem in längsaxialer Richtung der Durchstecköffnung 5 gegenüberliegenden Abschluss der Kupplungshülse 3 hin geneigt. Die Neigung der Verklammerungsklinken 8 ist entgegen einer Montagebewegungsrichtung geneigt, mit der das Keilsicherungsscheibenpaar mit ihrer Kupplungshülse 3 an einem Schraubbefestiger angeschlossen wird. Die Verklammerungsklinken 8 wirken widerhakenähnlich, wenn die Kupplungshülse 3 an einen Schraubbefestiger angeschlossen ist und die Verklammerungsklinken 8 bestimmungsgemäß in einen in längsaxialer Richtung wirkenden Hinterschnitt eingreifen. Die Verklammerungsklinken 8 sind in längsaxialer Richtung der Öffnung 5 der Kupplungshülse 3 elastisch verstellbar. Diese elastische Verstellbarkeit resultiert bei dem dargestellten Ausführungsbeispiel aus dem zur Herstellung der Kupplungshülse 3 verwendeten Material. Die Dicke der Verklammerungsklinken 8 ist zum Eingreifen in einen in längsaxialer Richtung wirkenden Hinterschnitt des Schraubbefestigers angepasst, an den der Kupplungsring 3 mit seinem Keilsicherungsscheibenpaar angeschlossen werden soll. Bei dem dargestellten Ausführungsbeispiel ist vorgesehen, dass die Verklammerungsklinken 8 den Gewindeauslauf des Gewindeschaftes einer Schraube hintergreifen.

Die Schnittdarstellung der Figur 2 zeigt die Ausbildung der Stufen 6, 6.1 der Keilsicherungsscheiben 1, 1.1 im Bezug auf den Abstand der beiden Flansche 7, 7.1 der Kupplungshülse 3 voneinander und die damit gebildeten Vorsprünge 6', 6.1'. Zwischen der zu dem Flansch 7 weisenden Seite des Vorsprunges 6' und der zu dem Flansch 7.1 weisenden Seite des Vorsprunges 6.1' ist hinreichend Freiraum, damit die beiden Keilsicherungsscheiben 1, 1.1 gegeneinander auf ihren Keilflächen verdreht werden können, wodurch sich die effektive Höhe des Keilsicherungsscheibenpaares gegenüber der Darstellung in den Figuren erhöht. Bei dem dargestellten Ausführungsbeispiel ist auf diese Weise Sorge dafür getragen, dass die beiden Keilsicherungsscheiben 1, 1.1 ohne weiteres gegeneinander gedreht werden können und die Vergrößerung der effektiven Dicke dieses Keilsicherungsscheibenpaares nicht durch die die Vorsprünge 6', 6.1' überkragenden Flansche 7, 7.1 behindert ist.

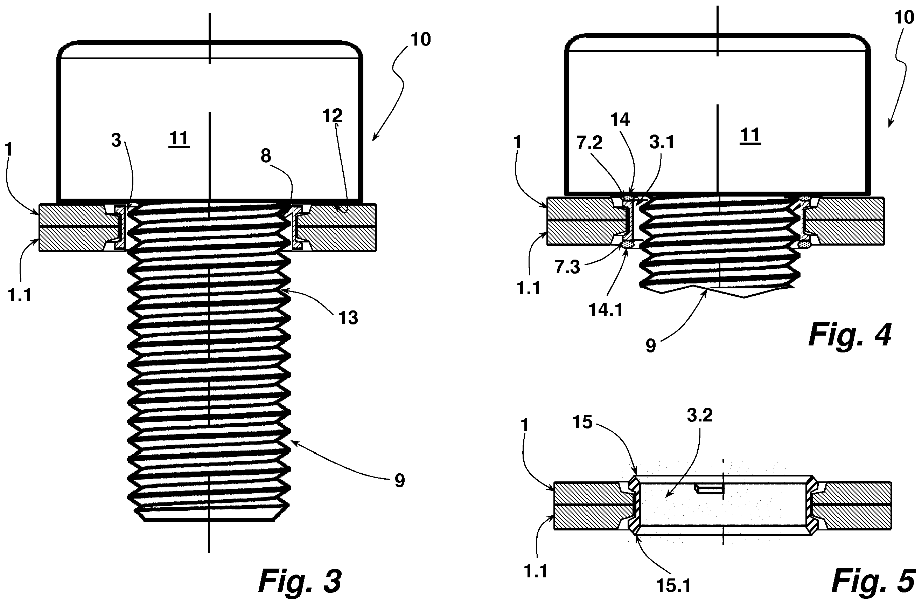

Figur 3 zeigt das aus den Keilsicherungsscheiben 1, 1.1 gebildete Keilsicherungsscheibenpaar mit seiner Kupplungshülse 3 montiert auf den Gewindeschaft 9 einer Schraube 10. Die Verklammerungsklinken 8 greifen zwischen zwei in Längserstreckung des Gewindeschaftes 9 benachbarte Gewindegängedes Schraubenschaftes 9 ein und halten die Kupplungshülse 8 mit ihrem Keilsicherungsscheibenpaar benachbart zu der durch die Unterseite des Schraubenkopfes 11 gebildeten Scheibenanlagefläche 12. Die Länge der Verklammerungsklinken 8 in radialer Richtung ist so bemessen, dass diese sich in der montierten Stellung der Kupplungshülse 3 auf dem Schraubenschaft 9 am Schraubenkern 13 abstützen oder daran anliegen. Soll das Keilsicherungsscheibenpaar von dem Schraubenkopf 11 wegbewegt werden, ist die damit einhergehende Schwenkbewegung der Verklammerungsklinken 8 in Richtung zu dem Schraubenkopf 11 hin durch ihre Abstützung am Schraubenkern 13 blockiert. Ein Herausdrücken der Verklammerungsklinken 8 in radialer Richtung wird durch die Abstützung der Kupplungshülse 3 an den ihre jeweilige Öffnung einfassenden Stirnflächen der Keilsicherungsscheiben 1, 1.1 behindert. Auf diese Weise kann das Keilsicherungsscheibenpaar mit ihrer Kupplungshülse 3 nur mit erhöhten Kräften von der Schraube 10 demontiert werden.

Unabhängig von dem beschriebenen Ausführungsbeispiel gilt generell, dass die Beweglichkeit der Verklammerungsklinken gegenüber dem zylindrischen Abschnitt der Kupplungshülse durch unterschiedliche Maßnahmen, wie beispielsweise das eingesetzte Material, die Materialstärke, die Umfangserstreckung und dergleichen einzeln oder in Kombination miteinander eingerichtet werden kann. Dieses erlaubt ein Einstellen der für eine Demontage der Scheiben mit ihrer Kupplungshülse von dem Schraubbefestiger, also: beispielsweise von dem Gewindeschaft eines Bolzens notwendigen Kraft. Die Verklammerungsklinken können durchaus ausgelegt sein, dass eine Demontage der Scheibenanordnung mit ihrer Kupplungshülse nur durch eine Beschädigung oder Zerstörung der Verklammerungsklinken möglich ist. In einer anderen Ausgestaltung, bei der die Scheibenanordnung, bestehend aus der wenigstens einen Scheibe und der Kupplungshülse demontierbar sein soll, wird man die Rückhaltekräfte entsprechend geringer einstellen.

Figur 4 zeigt eine Kupplungshülse 3.1, die prinzipiell aufgebaut ist wie die Kupplungshülse 3 der vorangegangenen Figuren. Daher gelten die diesbezüglichen Ausführungen gleichermaßen für die Kupplungshülse 3.1. Die Kupplungshülse 3.1 unterscheidet sich von der Kupplungshülse 3 dadurch, dass diese eine zusätzliche Dichtfunktionalität aufweist, um einen Gewindekanal abzudichten. Zu diesem Zweck sind die voneinander wegweisenden Stirnseiten der Flansche 7.2, 7.3 der Kupplungshülse 3.1 bei dem dargestellten Ausführungsbeispiel mit einer umlaufenden Silikonraupe 14, 14.1 als Dichtungsmasse ausgerüstet. Die auf den Flansch 7.2 aufgebrachte Silikonraupe 14 wirkt gegen die Unterseite des Schraubenkopfes 11. Die Silikonraupe 14.1 auf dem Flansch 7.3 der Kupplungshülse 3.1 wirkt gegen die Oberseite eines in den Figuren nicht dargestellten Spannwiderlagers. Durch diese Maßnahme ist der Gewindekanal, in den der Schraubenschaft 9 der Schraube 10 eingreift, wirksam abgedichtet.

Figur 5 zeigt eine weitere Kupplungshülse 3.2, die prinzipiell aufgebaut ist, wie die Kupplungshülse 3.1 und somit ebenfalls über eine Abdichtungsfunktionalität verfügt. Die Kupplungshülse 3.2 des Ausführungsbeispiels der Figur 5 ist aus einem TPE-Material (Thermoplastisches Elastomermaterial) gefertigt. Dieses Material eignet sich, um damit eine Abdichtung herbeizuführen. Die Formbeständigkeit ist ebenfalls hinreichend, damit die Kupplungshülse den an diese gestellten Anforderungen zum Anschluss an die Scheibe oder die Scheibenanordnung genügt. Im Unterschied zu der Kupplungshülse 3.1 des Ausführungsbeispiels der Figur 4 sind zum Erzielen der Dichtfunktionalität der Kupplungshülse 3.2 keine zusätzliche Silikonraupen oder dergleichen aufgebracht, sondern an die voneinander wegweisenden Flansche der Kupplungshülse 3.2 sind Dichtlippen 15, 15.1 angeformt. Die Wirkung der Dichtlippen 15, 15.1 der Kupplungshülse 3.2 entspricht denjenigen der Silikonraupen 14, 14.1 des Ausführungsbeispiels der Figur 4.

Es versteht sich, dass die Höhe der Kupplungshülse 3.1, um diese Dichtfunktionalität und somit die gewünschte Pressung auf die Silikonraupen 14, 14.1 zu ermöglichen, größer ist als die Dicke des Keilsicherungsscheibenpaares, bevor der Schraubbefestiger mit dem Keilsicherungsscheibenpaar verspannt wird. Die Kupplungshülse 3.1 bietet im Bereich ihres zylindrischen Abschnittes, auf den über die Silikonraupen 14, 14.1 die Spannkraft wirkt, ein wirksames Widerlager. Ein Ausbeulen des zwischen den Flanschen 7.2, 7.3 befindlichen zylindrischen Ringabschnittes nach außen ist durch die Anlage dieses Abschnittes der Kupplungshülse 3.1 an den in Radialrichtung nach innen weisenden Stirnflächen der Keilsicherungsscheiben 1, 1.1 behindert. Ein Ausweichen in Richtung zu dem Schraubenschaft wird dadurch verhindert, dass der Innendurchmesser der Kupplungshülse 3 nur um ein notwendiges Spiel zum Einführen des Schraubenschaftes größer ist als sein Außendurchmesser. Für die Dichtfunktionalität und das bestimmungsgemäße Verspannen des Schraubbefestigers an seinem Widerlager wird das Spiel zwischen den in radialer Richtung nach außen abragenden Flanschen 7.2, 7.3 der Kupplungshülse 3.1 genutzt. Aufgrund der Spannkraft wird die Kupplungshülse 3.1 gestaucht. Die durch das Stauchen in die Kupplungshülse 3.1 induzierte elastische Rückstellkraft ist diejenige Kraft, mit der die Silikonraupen 14, 14.1 gegen die komplementären Dichtflächen wirken. Ein bestimmungsgemäßes Verspannen, bei dem die Scheibenanlagefläche des Schraubbefestigers unmittelbar auf die Oberfläche der benachbarten Keilsicherungsscheibe wirkt und die gegenüberliegende Oberfläche der anderen Keilsicherungsscheibe gegen das Spannwiderlager ist somit trotz Vorsehens einer Dichtfunktionalität nicht beeinträchtigt. Die vorstehenden Ausführungen zu der Dichtfunktionalität der Kupplungshülse 3.1 gelten gleichermaßen für die Kupplungshülse 3.2 des Ausführungsbeispiels der Figur 5.

Die Erfindung ist anhand der Figuren zu speziellen Ausführungsbeispielen erläutert worden. Ohne den Umfang der geltenden Ansprüche zu verlassen, ergeben sich für einen Fachmann zahlreiche weitere Ausgestaltungen, die Erfindung umsetzen zu können.

### Bezugszeichenliste

- 1, 1.1: Keilsicherungsscheibe
- 2: Oberseite
- 3, 3.1, 3.2: Kupplungshülse
- 4: Öffnung
- 5: Durchstecköffnung
- 6, 6.1: Stufe
- 6', 6.1': Vorsprung
- 7, 7.1, 7.2, 7.3: Flansch
- 8: Verklammerungsklinke
- 9: Gewindeschaft
- 10: Schraube
- 11: Kopf
- 12: Scheibenanlagefläche
- 13: Schraubenkern
- 14, 14.1: Silikonraupe
- 15,15.1: Dichtlippen
- M: Mantelfläche

## Patentansprüche

1. Scheibenanordnung für einen Schraubbefestiger mit zumindest einer eine Öffnung (4) für den Durchgriff des männlichen Teils eines Schraubbefestigers (10) aufweisenden Scheibe (1, 1.1), wobei in der Öffnung (4) der wenigstens einen Scheibe (1, 1.1) eine Kupplungshülse (3, 3.1, 3.2) mit einer in radialer Richtung nach außen offenen U-förmigen Profilierung, gebildet durch zwei mit Abstand zueinander angeordnete und in radialer Richtung nach außen abragende Flansche (7, 7.1, 7.2, 7.3), angeordnet ist, durch welche Flansche (7, 7.1, 7.2, 7.3) die Kupplungshülse (3, 3.1, 3.2) formschlüssig in Richtung der Längsachse der Öffnung (4) an der zumindest einen Scheibe (1, 1.1) gehalten ist, **dadurch gekennzeichnet, dass** die Höhe der Kupplungshülse (3.1, 3.2) größer als die Dicke der zumindest einen Scheibe (1, 1.1) ist und die über die Dicke der wenigstens einen Scheibe (1, 1.1) hinausragenden Abschnitte der Kupplungshülse (3.1) zum Bereitstellen einer Dichtung beim Spannen des Schraubbefestigers (10) deformierbar sind, welche Kupplungshülse (3, 3.1, 3.2) mehrere in radialer Richtung nach innen vorspringende und in Richtung der Längserstreckung der Kupplungshülse elastisch verstellbare Verklammerungsklinken (8) trägt, die mit ihrem freien Ende in eine in radialer Richtung zu der Kupplungshülse (3, 3.1, 3.2) hin offene Verklammerungsnut eines Schraubbefestigers (10) eingreifen können.

2. Scheibenanordnung nach Anspruch 1, **dadurch gekennzeichnet, dass** die Verklammerungsklinken (8) im Bereich des zu der Scheibenanlagefläche (12) des Schraubbefestigers (10) weisenden Ende der Kupplungshülse (3, 3.1, 3.2) angeordnet sind.

3. Scheibenanordnung nach Anspruch 1 oder 2, **dadurch gekennzeichnet, dass** die Verklammerungsklinken (8) von ihrer Wurzel an der Kupplungshülse (3, 3.1, 3.2) zu ihrem freien Ende hin von der Scheibenanlagefläche (12) des Schraubbefestigers (10) weg weisend geneigt sind.

4. Scheibenanordnung nach Anspruch 1, **dadurch gekennzeichnet, dass** die hinausragenden Abschnitte der Kupplungshülse (3.1, 3.2) als Dichtlippen (15, 15.1) ausgeführt sind.

5. Scheibenanordnung nach einem der Ansprüche 1 bis 4, **dadurch gekennzeichnet, dass** die Kupplungshülse (3, 3.1, 3.2) ein Kunststoffteil ist.

6. Schraubbefestigerzusammenstellung mit einem einen Kopf (11) mit einer ringförmigen Scheibenanlagefläche (12) und einem einen Schaft (9) aufweisenden Schraubbefestiger und mit einer auf dem Schaft (9) des Schraubbefestigers sitzenden Scheibenanordnung nach einem der Ansprüche 1 bis 5.

7. Schraubbefestigerzusammenstellung nach Anspruch 6, **dadurch gekennzeichnet, dass** der Innenwanddurchmesser der Kupplungshülse (3, 3.1) dem Außendurchmesser des die Öffnung (5) derselben durchgreifenden männlichen Teils des Schraubbefestigers (10) oder eines mit dem Schraubbefestiger zusammenwirkenden komplementären Schraubbefestigers entspricht.

8. Schraubbefestigerzusammenstellung nach Anspruch 6 oder 7, **dadurch gekennzeichnet, dass** der Schraubbefestiger eine Schraube (10) ist und die Verklammerungsklinken (8) der Kupplungshülse (3, 3.1, 3.2) zum Halten der zumindest einen Scheibe (1, 1.1) an dem Schraubbefestiger (10) in das Gewinde und/oder den Gewindeauslauf des Schraubenschaftes (9) eingreifen.

9. Schraubbefestigerzusammenstellung nach Anspruch 8, **dadurch gekennzeichnet, dass** der Durchmesser der Kupplungshülse (3, 3.1, 3.2) im Bereich der Verklammerungsklinken unverstellt dem Kerndurchmesser des Schraubenschaftes (9) des Schraubbefestigers (10) entspricht.

## Claims

1. Washer assembly for a screw fastener, with at least one washer (1, 1.1) comprising an opening (4) for the engagement of the male part of a screw fastener (10), wherein arranged in the opening (4) of the at least one washer (1, 1.1) is a coupling sleeve (3, 3.1, 3.2) with a U-shaped profiling open outwards in the radial direction, formed by two flanges (7, 7.1, 7.2, 7.3) arranged at a distance interval from one another and projecting outwards in the radial direction, by which flanges (7, 7.1, 7.2, 7.3) the coupling sleeve is held in positive fit in the direction of the longitudinal axis of the opening (4) in the at least one washer (1, 1.1), **characterised in that** the height of the coupling sleeve (3.1, 3.2) is greater than the thickness of the at least one washer (1, 1.1), and the sections of the coupling sleeve (3.1) projecting over the thickness of the at least one washer (1, 1.1) can be deformed such as to provide a seal when the screw fastener (10) is tightened, which coupling sleeve (3, 3.1, 3.2) carries several elastically deformable clamping catches (8) projecting inwards in the radial direction and being elastically adjustable in the direction of the longitudinal extension of the coupling sleeve, these being capable of engaging with their free ends into a clamping groove of a screw fastener (10) which is open in the radial direction to the coupling sleeve (3, 3.1, 3.2).

2. Washer assembly according to claim 1, **characterised in that** the clamping catches (8) are arranged in the region of the end of the coupling sleeve (3, 3.1, 3.2) pointing towards the washer contact surface (12) of the screw fastener (10).

3. Washer assembly according to claim 1 or 2, **characterised in that** the clamping catches (8) are inclined from their root at the coupling sleeve (3, 3.1, 3.2) towards their free end, pointing away from the washer contact surface (12) of the screw fastener (10).

4. Washer assembly according to claim 1, **characterised in that** the projecting sections of the coupling sleeve (3.1, 3.2) are configured as sealing lips (15, 15.1).

5. Washer assembly according to any one of claims 1 to 4, **characterised in that** the coupling sleeve (3.1, 3.2) is a plastic part.

6. Screw fastener assembly, with a screw fastener comprising a head (11) with a ring-shaped washer contact surface (12) and a shank (9), and with a washer arrangement according to any one of claims 1 to 5 seated on the shank (9) of the screw fastener.

7. Screw fastener assembly according to claim 6, **characterised in that** the inner wall diameter of the coupling sleeve (3, 3.1) corresponds to the outer diameter of the male part of the screw fastener (10) engaging through the opening (5) thereof, or of a complementary screw fastener interacting with the screw fastener.

8. Screw fastener assembly according to claim 6 or 7, **characterised in that** the screw fastener is a screw (10) and, in order to hold the at least one washer (1, 1.1) to the screw fastener (9), the clamping catches (8) of the coupling sleeve (3, 3.1, 3.2) engage into the thread and/or the thread run-out of the screw shank (9).

9. Screw fastener assembly according to claim 8, **characterised in that** the diameter of the coupling sleeve (3, 3.1, 3.2) in the region of the clamping catches, without adjustment, corresponds to the core diameter of the screw shank (9) of the screw fastener (10).

## Revendications

1. Ensemble formant rondelle pour un élément de blocage par vissage comportant au moins une rondelle (1, 1.1) présentant une ouverture (4) pour l'engagement de la partie mâle d'un élément de blocage par vissage (10), dans laquelle ouverture (4) de l'au moins une rondelle (1, 1.1) est disposée une douille de couplage (3, 3.1, 3.2) avec un profilage en forme de U s'ouvrant vers l'extérieur dans le sens radial, formée par deux brides (7, 7.1, 7.2, 7.3) disposées à distance l'une de l'autre et en saillie radiale vers l'extérieur, à travers lesquelles brides (7, 7.1, 7.2, 7.3) la douille de couplage (3, 3.1, 3.2) est maintenue par complémentarité de forme dans le sens de l'axe longitudinal de l'ouverture (4) sur l'au moins une rondelle (1, 1.1), **caractérisé en ce que** la hauteur de la douille de couplage (3.1, 3.2) est supérieure à l'épaisseur de l'au moins une rondelle (1, 1.1) et que les tronçons de la douille de couplage (3.1) dépassant l'épaisseur de l'au moins une rondelle (1, 1.1) sont déformables afin de mettre à disposition une étanchéité au moment du serrage par l'élément de blocage par vissage (10), lesquelles douilles de couplage (3, 3.1, 3.2) supportent plusieurs cliquets de serrage (8) en saillie radiale vers l'intérieur et ajustables élastiquement dans le sens de l'étendue longitudinale de la douille de couplage, lesquels peuvent, par leurs extrémités libres, s'engager dans une rainure de serrage d'un élément de blocage par vissage (10) ouverte dans le sens radial, vers la douille de couplage (3, 3.1, 3.2).

2. Ensemble formant rondelle selon la revendication 1, **caractérisé en ce que** les cliquets de serrage (8) sont disposés dans la zone de l'extrémité de la douille de couplage (3, 3.1, 3.2) orientée vers la surface de butée de rondelle (12) de l'élément de blocage par vissage (10).

3. Ensemble formant rondelle selon la revendication 1 ou 2, **caractérisé en ce que** les cliquets de serrage (8), depuis leur base sur la douille de serrage (3, 3.1, 3.2) jusqu'à leur extrémité libre, sont inclinés en s'éloignant de la surface de butée de rondelle (12) de l'élément de blocage par vissage.

4. Ensemble formant rondelle selon la revendication 1, **caractérisé en ce que** les tronçons en saillie de la douille de couplage (3.1, 3.2), sont conformés en lèvres d'étanchéité (15, 15.1).

5. Ensemble formant rondelle selon l'une des revendications 1 à 4, **caractérisé en ce que** la douille de couplage (3, 3.1, 3.2) est une pièce en plastique.

6. Agencement d'élément de blocage par vissage comportant un élément de blocage par vissage présentant une tête (11) avec une surface de butée de rondelle (12) de forme annulaire et un fût (9) ainsi qu'un ensemble formant rondelle selon l'une des revendications 1 à 5, en assise sur le fût (9) de l'élément de blocage par vissage.

7. Agencement d'élément de blocage par vissage selon la revendication 6, **caractérisé en ce que** le diamètre de la paroi intérieure de la douille de couplage (3, 3.1) correspond au diamètre extérieur de la partie mâle de l'élément de blocage par vissage (10) s'engageant dans l'ouverture (5) de celle-ci ou d'un élément de blocage par vissage complémentaire agissant conjointement avec l'élément de blocage par vissage.

8. Agencement d'élément de blocage par vissage selon la revendication 6 ou 7, **caractérisé en ce que** l'élément de blocage par vissage est une vis (10) et que les cliquets de serrage (8) de la douille de couplage (3, 3.1, 3.2) s'engagent, afin de maintenir l'au moins une rondelle (1, 1.1) sur l'élément de blocage par vissage (10), dans le filetage et/ou la fin du filetage du fût de vissage (9).

9. Agencement d'élément de blocage par vissage selon la revendication 8, **caractérisé en ce que** le diamètre de la douille de couplage (3, 3.1, 3.2) au niveau des cliquets de serrage correspond, sans réglage, au diamètre du noyau du fût de vissage (8) de l'élément de blocage de vis (10).
